# EUROPEAN PATENT SPECIFICATION

(11) **EP 4 174 696 B1**
(45) Date of publication and mention of the grant of the patent: **02.12.2026**
(21) Application number: 21205158.5
(22) Date of filing: 28.10.2021
(51) Int. Cl.: G06F 21/56, G06Q 10/00, G06F 16/38

(54) **METHOD AND COMPUTER DEVICE FOR IDENTIFYING APPLICATIONS OF A GIVEN ORGANIZATION**
VERFAHREN UND COMPUTERVORRICHTUNG ZUR IDENTIFIZIERUNG VON ANWENDUNGEN EINER GEGEBENEN ORGANISATION
PROCÉDÉ ET DISPOSITIF INFORMATIQUE POUR IDENTIFIER DES APPLICATIONS D'UNE ORGANISATION DONNÉE

(43) Date of publication of application: 03.05.2023
(73) Proprietor: Deutsche Telekom AG, 53113 Bonn (DE)
(72) Inventor: Sbeiti, Mohamad, 45657 Recklinghausen (DE); Schmeling, Max, 65779 Kelkheim (DE)
(74) Representative: karo IP

(56) References cited:
- US-A1- 2017 250 994
- US-A1- 2018 007 077
- SEBASTIAN SILVIA SILVIA SEBASTIAN@IMDEA ORG ET AL: "Towards Attribution in Mobile Markets Identifying Developer Account Polymorphism", PROCEEDINGS OF THE 26TH ACM SIGKDD INTERNATIONAL CONFERENCE ON KNOWLEDGE DISCOVERY & DATA MINING, ACMPUB27, NEW YORK, NY, USA, 30 October 2020 (2020-10-30), pages 771 - 785, XP058641307, ISBN: 978-1-4503-7998-4, DOI: 10.1145/3372297.3417281

## Description

### TECHNICAL FIELD

The present invention relates to a method and computer device for identifying applications of a given organization. The present invention also relates to a computer program product and a computer-readable storage medium.

### BACKGROUND

Security is a core need for digitization, Industry 4.0 and Internet of Things (IoT), and with 5G - the digital life - the attack surface is to become larger due to the new dimensions of connected entities. It has been reported that there have been 16 billion IoT connected devices in 2016 while 29 billion devices are forecast by 2022. Meanwhile, the number of successful large-scale cyber-attacks is rising, and the asymmetry in the cyberwarfare is increasing. Here, the ability of skilled hacker to harm enterprises, organizations and even states is increasing, despite more investments in defenses. Thereby, a fundamental question that the driver of digitization and 5G needs to answer is: how adopters of digitization and 5G could be well equipped against security threats?

Especially the following three points pose an immense challenge, with which existing security measures and tools have not been able to cope:
1) A detailed overview of own (enterprise's) assets is decreasing due to the continuous boost of new online services, applications (apps), and interconnected systems, combined with agile development methods and the emerging mutli cloud deployment strategy.
2) The number of discovered vulnerabilities is rapidly increasing, and it has been reported by Snyk that an 88% increase in application vulnerabilities was witnessed over the last two years. This curve is even expected to continue rising due to the growing number of services and products combined with the total increase of resources and capabilities in the area of vulnerability research.
3) The large-scale exploitation time of vulnerabilities is ridiculously decreasing. According to a Fireeye's report, two vulnerabilities were successfully exploited within hours of a patch release, CVE-2018-2628 and CVE-2018-7602. This is due to the fact the number of online easy-to-use open-source exploitation tools and proof-of-concepts have become widespread.

Due to these facts and the limitation of existing solutions, malicious users with low level of expertise have become capable to hack large organizations.

Given the increasing persistent threat of cyber-attacks, organization of any kind are urged to employ "real-time" security measures to reduce the risk of operational incidents. From the offensive security perspective, detecting and patching published vulnerabilities is considered an essential pilar to this end. A core challenge here is to continuously perform this vulnerability detection in time. To do so, it is inevitable to regularly perform an inventory of the assets belonging to the organization, which need to be checked for vulnerabilities. While there are plenty of tools for vulnerability checks, inventorying the assets (e.g. apps) of an organization or enterprise is still in its infancy. There is thus a potential and a need for a holistic, large-scale, an automated identification of an enterprise's assets such as apps so as to check vulnerability in time.

US 2017/250 994 A1 discloses a system and method that automatically extracts features from a mobile app, classifies the app into one or more categories, and generates a compliance report suggesting alternative apps when the original app is disallowed. Research paper "Towards Attribution in Mobile Markets Identifying Developer Account Polymorphism", by S. Sebastian and J. Caballero, published in "Proceedings of the 2020 ACM SIGSAC Conference on Computer and Communications Security Virtual Event" discloses a research tool that automatically links mobile-market developer accounts, apps, and other indicators of compromise by expanding and correlating metadata to build attribution graphs for malicious operations. US 2018/007 077 A1 discloses a scalable vulnerability testing platform that receives test tasks, dynamically provisions and manages multiple test environments, runs the tests in parallel, and enforces time-based limits while reporting the results.

### SUMMARY

An object of the present invention is to provide a mechanism capable of automatically identifying applications (apps) in an app store which belong to a given organization in a dynamic way.

This object is solved by the subject matter of the independent claims. Advantageous embodiments of the invention are subject matter of the dependent claims.

The features of the various aspects of the invention described below or the various examples of implementation may be combined with each other, unless this is explicitly excluded or is technically impossible.

According to a first aspect of the invention, the invention provides a method for identifying apps of a given organization, comprising the following method steps:
obtaining a characteristic of an organization, wherein the characteristic of the organization includes an organization name and/or a domain name of the organization;
obtaining a list of apps in an app store;
extracting an app characteristic for each app in the list from the app store, wherein the app characteristic includes: an app publisher name and/or a domain name of an app publisher;
determining a first feature for each app in the list which indicates for each app whether the domain name of the app publisher matches the domain name of the organization, and/or whether the app publisher name matches the organization name;
identifying, for each app in the list, whether an app in the list belongs to the organization based on the determined first feature, wherein an app in the list is identified as belonging to the organization when the domain name of the app publisher for the app matches the domain name of the organization, and/or the app publisher name for the app matches the organization name.

This method enables enterprises or organizations to continuously (re)find or (re)discover their always changing app assets in an automated and dynamic way, which also enables them to detect vulnerabilities of their app assets in time. In this method, app characteristics of apps can be extracted from app pages of an app store, these app characteristics contains information used to identify with acceptable certainty whether an app is owned by (that is, belongs to or in possession of) a given organization. Each of these app characteristics includes an app publisher name and/or a domain name of an app publisher. By doing this, all apps in the app store which present app characteristic matching the characteristic of the organization can be identified and are considered as the apps owned by the given organization. This enables identifying all and only those apps in the app store which belong to the given organization at a large scale.

In an embodiment, the method is performed by a computer device. The computer device thus can provide an up-to-date overview of apps owned by organization in an efficient way.

Identifying apps such as mobile apps which belong to a given organization can be difficult and complex, due to non-uniform names of app publisher, and unstructured or misleading textual data in app pages of an app store.

With taking these difficulties and complexities into consideration, in an embodiment, the organization name comprises a legal name of the organization. Optionally, the organization name further comprises one or more of the following: a legal name of a subsidiary of the origination, a trademark name of the organization, a trademark name of the subsidiary, a colloquial name of the legal name of the organization or a colloquial name of the legal name of the subsidiary, a synonym of the legal name of the organization or a synonym of the legal name of the subsidiary. This has the advantageous of considering the non-uniform names of organization and app publisher, so that all apps which belong to the organization can be identified.

In another embodiment, the app publisher name for each app in the list comprises a name of an app publisher which is used in the app store for each app in the list and/or a legal name of an app publisher for each app in the list. For example, a name of an app publisher which is used in the app store for each app in the list can be an account name. This account name can be the same as the legal name or different than the legal name. One or more account names may be used in the app store to publish apps which belong to the same origination.

In an embodiment, the organization name comprises a legal name of the organization, and if the origination has a subsidiary, the organization name further comprises a legal name of the subsidiary of the origination; and the app publisher name for each app in the list comprises a legal name of an app publisher for each app in the list. Generally, a legal name is considered as a strong indicator for identifying an ownership. By using the legal names of the organization and app publisher, apps which belong to the organization can be identified fast and accurately.

In an embodiment, the method further comprises the following method steps:
obtaining a second feature for each app in the list from an app image of each app in the list, wherein the second feature includes one or more of the following: color information from the app image, an available text from the app image, a structural property of the app image, and trademark information of the app image, wherein the app image of each app in the list includes an app icon of each app in the list or a screenshot of an app page of each app in the list;
extracting a common feature of the second features for apps which have been identified as belonging to the organization; wherein an app in the list which has not yet been identified as belonging to the organization is called an invalid app; and
identify an invalid app in the list as an app belonging to the organization when the second feature for the invalid app matches the common feature.

By doing this, not only all apps in the app store which present app characteristic matching the characteristic of the organization can be identified and are considered as the apps owned by the given organization. The other apps in the app store which do not explicitly present such app characteristic can also be identified. In this embodiment, the similarity (e.g. common feature) of the app icons of all apps which has been identified as belonging to the organization can be extracted autonomously without human intervention. The other apps present the similarity (e.g. common feature) in their app icons are also be identified as belonging to the organization. Thereby, all apps which belong to the organization can be correctly found.

In an embodiment, the method further comprises using a set of apps, which have been identified as belonging to the target organization based on the determined first feature, as training data; using a machine learning algorithm to build a model that predicts whether a new app belongs to the organization, wherein the model is trained on the training data, and the new app is an app in the list which has not been identified as belonging to the organization; identify the new app as belonging to the organization based on the predicting result of the model.

Through machine learning algorithm, some characteristic implicitly shared by the apps which have been identified/marked as belonging to the target organization (that is, shared by the training data) can be found, and be further used to predicting the new app.

In an embodiment, the method further comprises the following method steps:
clustering all apps in the list into multiple clusters based on a machine learning clustering and a set of apps which have been identified as belonging to the target organization based on the determined first feature;
determining, for each of the multiple clusters, whether there is at least one app in a group of the multiple clusters which has been identified as a valid app;
when there is at least one app in a cluster of the multiple clusters which has been identified as belonging to the organization, identify all apps in the clusters as belonging to the organization.

This has the advantage of enabling all apps which belong to the organization can be correctly found. In this embodiment, the apps which give almost no hint on their owner can also be identified. Optionally, the machine learning clustering is hierarchical clustering.

In an embodiment, the domain name of the app publisher comprises one or more of the following: a primary domain name of a website of the app publisher, a domain of an email address of the app publisher, or a domain name of the app publisher in an URI (Unified Resource Identifier) of an app page of the app store.

In an embodiment, the domain name of the organization comprises all available primary domain names which belong to the organization.

In an embodiment, the first feature for each app comprises a Boolean data type which has one of two possible values, wherein one possible value indicates the domain name of the app publisher matches the domain name of the organization, and the other possible value indicates the domain name of the app publisher does not match the domain name of the organization; and/or the first feature for each app comprises a numeric factor which indicates for each app whether the app publisher name matches the organization name, when the numeric factor is above a predefined threshold, it indicates that the app publisher name matches the organization name.

In an embodiment, the list is a list of all apps in the app store that potentially belong to the organization; and the method step of obtaining the list comprises: obtaining a list of all apps in the app store that potentially belong to the organization according to the organization name.

In an embodiment, the method further comprises: storing information about all the apps which have been identified as belonging to the organization, or sending the information about all the apps which have been identified as belonging to the organization. By doing this, the information about all the apps which have been identified as belonging to the organization can be used for further analyzing or check such as for vulnerability check or for determining the changes of apps owned by the organization (the given organization) over time.

In an embodiment, the method further comprises the following method steps:
downloading all the apps which have been identified as belonging to the organization; and
performing vulnerability check on the downloaded apps; and
optionally, the method further comprising: sending the result of the vulnerability check to a database.

In this embodiment, after apps which belong to the organization have been identified, they get downloaded from the app store, so that an automated vulnerability check can be performed on the downloaded apps. Optionally, the result of the vulnerability check is pushed to the data base. Dashboards, which include information about vulnerability issues, the information about vulnerability of apps, or the changes of apps which belong to the organization over time, can be created based on the database.

According to a second aspect of the invention, the invention provides a computer device for identifying apps of a given organization, comprising a processing unit. The processing unit is configured to perform the method according to the first aspect of the invention or the method according to any one of embodiments of the first aspect of the invention.

Specifically, the processing unit is configured to:
obtain a characteristic of an organization, wherein the characteristic of the organization includes an organization name and/or a domain name of the organization;
obtain a list of apps in an app store;
extract an app characteristic for each app in the list from the app store, wherein the app characteristic includes: an app publisher name and/or a domain name of an app publisher;
determine a first feature for each app in the list which indicates for each app whether the domain name of the app publisher matches the domain name of the organization, and/or whether the app publisher name matches the organization name;
identify, for each app in the list, whether an app in the list belongs to the organization based on the determined first feature, wherein an app in the list is identified as belonging to the organization when the domain name of the app publisher for the app matches the domain name of the organization, and/or when the app publisher name for the app matches the organization name.

According to a third aspect of the invention, the invention provides a computer program product comprising an instruction, wherein when the computer program product is run on a computer, the computer is enabled to perform a method according to the first aspect of the invention or the method according to any one of embodiments of the first aspect of the invention.

According to a fourth aspect of the invention, the invention provides a computer-readable storage medium comprising executable instruction to configure a processor on a computer to perform a method according to the first aspect of the invention or the method according to any one of embodiments of the first aspect of the invention.

### BRIEF DESCRIPTION OF THE DRAWINGS

In the following, preferred implementation examples of the present invention are explained with reference to the accompanying Fig.:
- Fig. 1:: shows a diagram of a method for identifying apps of a given organization in accordance with an embodiment of the present invention;
- Fig. 2:: shows a diagram of a method for identifying apps of a given organization in accordance with another embodiment of the present invention;
- Fig. 3:: shows a diagram of a computer device for identifying apps of a given organization in accordance with an embodiment of the present invention.

Embodiments of the present invention provide a method and a device for identifying apps of a given organization. This can be specifically used to find these apps out of all available apps in an app store which is owned by (that is, belong to) a given organization. The ownership is identified using app characteristic, e.g., a name of app publisher, a legal name or a domain name of app publisher. The app characteristics of these apps reveal evidence to declare with acceptable certainty that these apps should belong to the given organization.

Before discussing the various embodiments of the invention in further detail below, the following paragraphs will give a brief overview on the meaning of several terms frequently used herein and their interrelation and dependencies.

Within the context of the present invention, an application (app for short), also called application program or application software, can be any application downloadable from an app store. For example, an app is a mobile app which is designed to run on a mobile device such as a phone, tablet, or watch. Alternatively, an app can be specifically a desktop application which is designed to run on a desktop computer or a web application.

Within the context of the present invention, an app store, also known as app marketplace, is a type of digital distribution platform for applications (apps for short). An app store normally offers apps for download. An app store can also provide information about an app such as app characteristic which can be obtained (e.g. scraped) from corresponding app page or retrieved using an API (Application Programming Interface). In one example, an app store is a Google Play Store, an Apple App Store or a Microsoft Store.

Within the context of the present invention, an organization can be any type of enterprise, company, firm, organization, (legal or private) association, entity, corporate, institution or legal person which has at least partial ownership of an app in an app store.

Within the context of the present invention, an app product page or an app page denotes a view within an app store which shows detailed information (e.g. an app characteristic) about an app.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

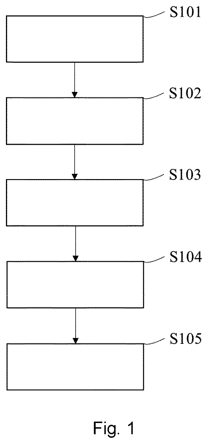

Fig. 1 shows a diagram of a method for identifying apps of a given organization. The method might be performed by a computer device. The method comprises the following method steps:
S101: obtaining a characteristic of an organization, wherein the characteristic of the organization includes an organization name and/or a domain name of the organization.
S102: obtaining a list of apps in an app store.

The list obtained in S102 is a list of all apps in an app store or a list of apps in an app store which potentially belong to the organization.

The list in this step can be obtained from a user, from the app store or from a device. The list can also be determined or created based on a list of all available apps in the app store.

S103: extracting an app characteristic for each app in the list from the app store, wherein the app characteristic includes: an app publisher name and/or a domain name of an app publisher.

S104: determining a first feature for each app in the list which indicates for each app whether the domain name of the app publisher matches the domain name of the organization, and/or whether the app publisher name matches the organization name.

S105: identifying, for each app in the list, whether an app in the list belongs to the organization based on the determined first feature, wherein an app in the list is identified as belonging to the organization when the first feature of the app indicates that the domain name of the app publisher for the app matches the domain name of the organization, and/or the app publisher name for the app matches the organization name.

### A characteristic of an organization:

Within the context of the present invention, a characteristic of an organization refers to any characteristics which describe the organization, such as an organization name and/or a domain name of the organization.

### a) Organization name

In one embodiment, the organization name comprises a legal name of the organization. Optionally, the organization name further comprises one or more of the following: a legal name of a subsidiary of the origination, a colloquial name of the legal name of the organization or a colloquial name of the legal name of the subsidiary, a synonym of the legal name of the organization or a synonym of the legal name of the subsidiary. For example, for a given organization "Deutsche Telekom AG", the organization name includes "Telekom", "Deutsche Telekom GmbH", "Deutsche Telekom ", "Deutsche Telekom AG", "T-Mobile USA", "Magenta Telekom", "Magyar Telekom", "T-Systems International GmbH", etc.

Alternatively, or additionally, the organization name comprises a trademark name of the organization. The organization may use a particular trademark name to identify its goods and services such as apps. For example, the trademark name can be a trademark registered at a trademark office such as at German Patent and Trade Mark Office (DPMA) or at European Union Intellectual Property Office (EUIPO). If the organization has a subsidiary, the organization name may further comprises a trade mark name of the subsidiary.

Optionally, the organization name such as legal name or trademark name can be obtained via search engine (e.g. google) or obtained from a database.

### b) Domain name

In one embodiment, the domain name of the organization means a domain name which belong to the organization. It might be a primary domain name which belong to the organization. Herein, a primary domain name includes a top-level domain (TLD) and a second-level domain (SLD or 2LD). The second-level domain normally indicates the organization that registered the domain name with a domain name registrar. In some examples, the primary domain name further comprises a third-level domain. In this case, the third-level domain may be used to indicate the organization that registered the domain name.

Advantageously, the primary domain name includes all available primary domain names which belong to the organization. In one example, for the given organization "Deutsche Telekom AG", the available primary domain includes "telekom.de", "telekom.com", "tmobile.com", etc.

In one embodiment, at step S101, all subsidiaries of the organization are derived. All available legal names of the organization and all available legal names of all subsidiaries of the organization are obtained as the organization name. Optionally or additionally, colloquial names and/or synonyms of all available legal names of the organization, colloquial names and/or synonyms of all legal names of all available subsidiaries are also obtained as the organization name. At step S101, all available primary domain names which belong to the organization are also obtained.

### An app characteristic of an app

Within the context of the present invention, an app characteristic of an app refers to information which can be extracted from corresponding app page of an app store (that is, an app page corresponding to the app) without having to download the app itself. An app characteristic of an app describes the app.

An app characteristic includes: an app publisher name and/or a domain name of an app publisher. Within the context of the present invention, the term "app publisher" is synonym for the term "app developer" or "a developer of an app".

### c) App publisher name

In one embodiment, an app publisher name of an app includes a name of an app publisher/app developer used in the app store (e.g. in the corresponding app page of the app store) for the app. Advantageously, an app publisher name of an app is an account name which is used to publish the app in an app store.

For example, the organization "Deutsche Telekom AG" has an account name of "Telekom Deutschland GmbH" in the app store, this account name can be considered as the app publisher name. It is to be noted that the account name does not necessarily need to have a semiotic relation to the organization. The account name can be any name used for publishing the app in the app store. When performing step 103, the app publisher name can be extracted from the corresponding app page of the app store.

Alternatively, or additionally, an app publisher name includes a legal name of an app publisher. The legal name of the app publisher means the legal name belongs to the app publisher or belongs to the organization which the app publisher works for. For example, an app page of an app store can provide an option for the app publisher to provide a legal name of the organization which the app publisher works for. This legal name provided in the app page denotes the legal name of the app publisher. By using the legal name of the app publisher as the app characteristic, the method for identifying apps of a given organization can be performed more effectively. In some examples, the legal name of an app publisher can be the same as or similar to the account name.

### d) Domain name of app publisher/app developer

In one embodiment, the domain name of the app publisher comprises a primary domain name of a website of the app publisher, a domain of an email address of the app publisher, or a domain name of the app publisher in an URI (Unified Resource Identifier) of an app page of the app store.

Within the context of the present invention, a primary domain name is defined as comprising a top-level domain (TLD) and a second-level domain (SLD or 2LD). In some examples, the primary domain name further comprises a third-level domain.

Optionally, an app page of an app store contains a domain of a website of the app publisher or a URL (Unified Resource Locator) of a website of the app publisher. The primary domain name of the website of the app publisher can then be extracted (e.g. at step S103) from the information (the domain or the URL of the website of the app publisher) contained in the app page. In an example, the URL "https://www.telekom.mk" of a website of an app publisher is contained in an app page of Google Play Store, the primary domain name of the website of the app publisher to be extracted (e.g. at step S103) is "telekom.mk". Sub-level domains are ignored. The corresponding domain name thus comprises the primary domain name "telekom.mk".

Optionally, an app page of an app store contains an email address of an app publisher. The domain of the email address of the app publisher can be extracted (e.g. at step S103) from the email address contained in the app page. For example, when the email address contained in the app page is "info@telekom.com", the domain of the email address to be extracted is "telekom.com". The corresponding domain name thus comprises the domain of the email address telekom.com".

Optionally, an URI of an app page of an app store is provided. The domain name of the app publisher in the URI of the app page can be extracted (e.g. at step S103). In an example, if the app store is Google Play Store, the domain name of the app publisher in the URI can be extracted as follows: extract the first two strings which result when splitting the URI after the "?id=" part at the dot "."; and concatenate the strings in reverse order using a dot ".". E.g. if the URI of the app page is "https://play.google.com/store/apps/details?id=de.telekom.mail", the extracted domain name of the app publisher in the URI is then "telekom.de".

### Other embodiments

In one embodiment, the method further comprises: marking all apps in the list which have been identified as belonging to the organization via the step S105 as valid apps; and/or marking all apps in the list which have not (yet) been identified as belonging to the organization via the step S105 as invalid apps. The step marking can mean labeling or flagging.

In another embodiment, the method further comprises: storing information about all the apps which have been identified as belonging to the organization, or sending the information about all the apps which have been identified as belonging to the organization to a device or to a database.

In another embodiment, the method further comprises the following method steps: downloading all the apps which have been identified as belonging to the organization; and performing vulnerability check on the downloaded apps. Optionally, the result of the vulnerability check is pushed to a data base. The method then further comprises: sending the result of the vulnerability check to the database.

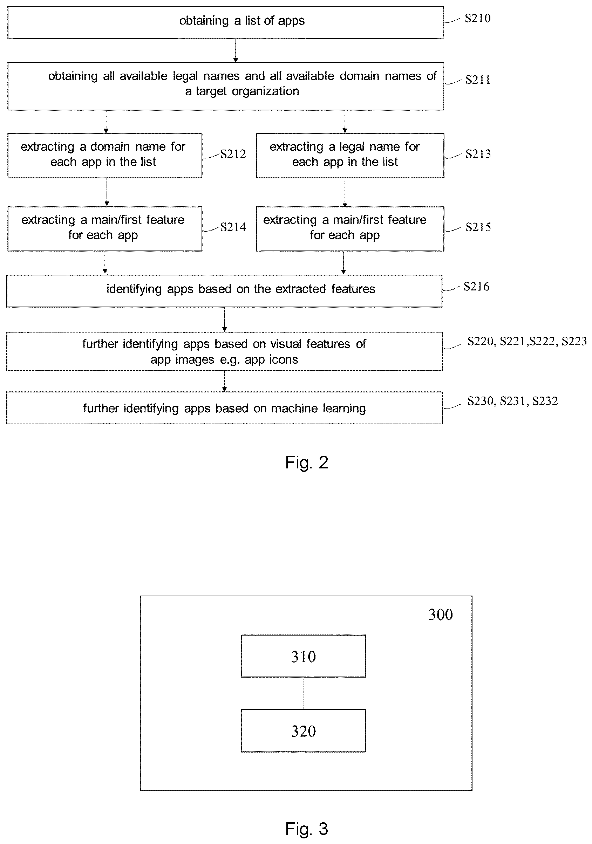

Fig.2 shows an embodiment of a method for identifying apps of a given organization. In this embodiment, the method comprises at least the following steps of S210-S216.

### (1) identifying apps based on main features (features created in step 214 and/or in step 215)

S210: obtaining or creating a list of apps in an app store that is to be identified.

A list of all available apps in the app store can be used in this step. But this could lead to performance issue and time issue due to huge amount of information on high number of apps to be identified.

Advantageously, a list of all apps in the app store that could potentially belong to a target organization (that is, the given organization) is obtained or created in this step. In one example, step S211 includes: searching apps in the app store by using all known names of the target organization (e.g., all legal names of the given origination and the given origination's subsidiary, and all colloquial names and synonyms corresponding to all legal names of the given origination and the given origination's subsidiary), respectively; taking a symmetric difference of all sets of apps which can be found in the app store via the searching (the search results) as the list of all apps in the app store that could potentially belong to the target organization, or taking a union set of all sets of apps which can be found in the app store via the searching and excluding all duplicates in the union set as the list of all apps in the app store that could potentially belong to the target organization.

S211: obtaining all available legal names and all available domain names of the target organization.

In this step, available characteristics of the target organization are obtained. If the target organization has a subsidiary, all available legal names in S211 include all available legal names of the target organization and its subsidiary. Details can be seen in previous embodiments.

S212: extracting a domain name of an app publisher for each app in the list.

In this step, for each app, a domain name of the app publisher for each app can be extracted from a corresponding app page of the app store. Each app has its corresponding app page in the app store.

S213: extracting a legal name of an app publisher for each app in the list.

For each app, the legal name of the app publisher can be extracted from a corresponding app page of the app store.

S214: creating a feature for each app which indicates for each app whether the domain name extracted in step S212 matches any of the available domain names of the target organization.

In one example, the feature created in S214 is a Boolean data type which has one of two possible values (usually denoted true and false). When a Boolean data type for a particular app is true, it means that the domain name extracted in step S212 for the particular app matches at least one of the available domain names obtained in step S210. That is to say, the domain name extracted in step S212 is identical to at least one of the available domain names obtained in step S210. When a Boolean data type for a particular app is false, it means that the domain name extracted in step S212 for the particular app cannot match any one of the available domain names obtained in step S210.

S215: creating a feature for each app which indicates for each app whether the legal name extracted in step S213 matches any of the available legal names of the target organization.

The feature created in S215 can be, for example, a numeric factor.

In an example, step S215 comprises following steps:
S215 a): preprocessing characters of all available legal names of the target organization obtained in S211 to generate a target word list.

The target word list comprises words from characters of all available legal names of the target organization, wherein each of the words is an item in the target word list. A word is any string of characters that is separated by regex boundary-character /\b/.

During the preprocessing, all uppercase characters of all available legal names are transformed into lowercase, and any characters that do not match the regex pattern /a-z0-9/ are dropped. The regex pattern may be adapted for different languages, for example, the regex pattern may be adapted for German langue to regard the "Umlaute" (e.g. ä, ö, ü). Any legal forms of a company or abbreviations of the legal forms such as "LLC", "GmbH" or Nyrt (Abbreviation of nyilvánosan működö̋ részvénytársaság ("public limited company")) is removed from the target word list.

S215 b): generating a dictionary which maps each of words in the target word list to the number of times it occurs in the target word list (hereinafter occurrence value).

For example, the dictionary may comprise mapping relation between each of the words and its occurrence value, e.g. {"deutsche": 5, "deutschetelekom": 10, "telekom": 10, "magyar": 5 ...}, wherein {"telekom": 5} means that the word "telekom" occurs five times in the target word list (e.g. also means it appears five times in all available legal names of the target organization). Embodiments of the present invention is not limited to this example.

S215 c): for each app, preprocessing the legal name of the app publisher extracted in step S213 to generate a word list for each app.

The preprocessing is performed for each app. The preprocessing of legal names in step S215 c) is the same as the preprocessing of legal names in step S215 a).

For a particular app, after the preprocessing in S215 c), a word list for the particular app is obtained, which comprises words from characters of the legal name of the app publisher corresponding to the particular app. In an example, for the app "Telekom", the legal name of its app publisher obtained via step S213 is "Magyar Telekom Nyrt", and the word list obtained in S215 c) comprises the word "magyar" and the word "telekom".

S215 d): calculating a numeric factor for each app based on the word list generated in S215 c) and the dictionary.

For a particular app, searching, in the dictionary, each of the words from the word list generated in S215 c) to obtain its occurrence value, and calculate a sum of the occurrence values of all words from the word list generated in S215 c). The sum of the occurrence values is the numeric factor for the particular app.

The numeric factor is an indication on how often the words from the word list occur in all available legal names of the target organization. When the numeric factor for the particular app is above a predefined threshold, it indicates that the legal name extracted in step S213 matches any of the available legal names of the target organization.

In some embodiments, a feature created in step 214 and/or a feature created in step 215 is also called a main feature or a first feature.

S216: identifying, for each app in the list, whether it belongs to the organization based on the feature created in step 214 for each app and/or based on the feature created in step 215 for each app.

An app in the list is identified as belonging to the organization when the feature of the app created in step 214 is true and/or when the numeric factor of the app created in step 215 is above a predefined threshold.

An app in the list which has been identified as belonging to the organization is called a valid app. An app in the list which has not (yet) been identified as belonging to the organization is called an invalid app. After step S216, a list of valid apps or a list of invalid apps can be obtained.

In this embodiment, all apps in the app store which present app characteristic matching the characteristic of the target organization can be identified and are considered as the apps owned by the target organization.

Optionally, a multi-level approach can be used to identify apps which belong to the target organization. That is, in addition to the method steps 210 to 216, the method further comprises the following method steps S220-S223 to identify apps which belonged to the target organization based on visual features of app images such as app icons. A visual feature is also called a second feature in some embodiments.

### (2) further identifying apps based on visual features of app images

S220: extracting an app image for each app in the list.

The app image for each app in the list can be extracted from the app store. The extracted app image for a particular app can be for example an app icon of the particular app, the app icon is in a form of image. Alternatively, the extracted app image for a particular app is an app screenshot such as a screenshot of an app page of the particular app.

S221: extracting a visual feature from the app image of each app.

The visual feature from the app image (e.g. app icon) of each app includes one or more of the following: color information from the app image, an available text (e.g. an available string) from the app image, and a structural property of the app image.

Alternatively or additionally, the visual feature from the app image such as app icon includes trademark information. Trademark information includes information about a trademark (e.g. a name, word, phrase, logo, symbol, design, image, or a combination of these elements). The target organization might use its trademark in the app icon of its app.

For exemplary purposes only, most of the following embodiments are outlined in relation to the app image being app icon. It should be noted that the invention may be advantageously used for example to app image other than app icon, e.g. an app screenshot.

Accordingly, step 221 comprises one of the following sub-steps:
S221 a): extracting an available text from the app icon of each app.

At least some of the app icons comprises a text (e.g. a string). The text which is available from any of the app icons is extracted. The extracted available text can be stored as a single string with any tokens separated by a single space character.

S221 b): extracting color information from the app icon of each app.

Color information can be considered as a visual feature of an app icon. The color information might be a color palette with dominate colors (e.g. three most dominate colors) from the app icon of each app.

S221 c): extracting a structural property of the app icon of each app.

In this step, structural properties (e.g. image compositions) of all app icons are extracted. The structural property of a particular app icon may present a characteristic of a pattern or a shape of the particular app icon (e.g. image composition). The structural property may indicate how shapes in the image are aligned and where they are located.

S222: extracting a common feature of the visual features for all apps which have been identified as belonging to the organization via S216.

An app in the list which has been identified as belonging to the organization is also called a valid app. An app in the list which has not yet been identified as belonging to the organization is called an invalid app.

Among all valid apps which are identified via S216, if there is a certain number (threshold) of valid apps share/have the same visual feature (e.g. color information, available text or structural propriety), this visual feature shared by the certain number of valid apps can be considered as the common feature of the visual features for all apps which have been identified as belonging to the organization.

The common feature is considered as a representative for the target organization and can subsequently be used to identify other apps.

S223: identify an invalid app in the list as an app belonging to the target organization when the second feature for the invalid app matches the common feature.

Through step S222, all those apps which have not (yet) been identified as belonging to the target organization via step S216 can be further identified based on the common feature extracted in step S222. **If** an app which have not been identified as belonging to the target organization via step S216 has the visual feature matches the common feature (that is, the visual feature is the same as or similar to the common feature), such app is identified as belonging to the target organization.

This ensures that all apps which belong to the target organization can be correctly identified.

Optionally, in addition to the method steps S210-S216 or in addition to the method steps S210-S216 and S220-S223, the method can further comprise the following method steps to correctly identify all apps which belong to the target organization.

### (3) further identifying apps based on machine learning

S230: using a set of apps, which have been identified as belonging to the target organization via step 216, as training data.

At least some of or all of the apps which have been identified as belonging to the target organization via step 216 are used as training data. This means that the information about these apps such as app characteristic are used as training data for machine learning algorithm.

S231: using a machine learning algorithm to build a model that predicts whether a new app belongs to the organization, wherein the model is trained on the training data, and the new app is an app in the list which has not been identified as belonging to the organization.

Through machine learning algorithm, some characteristic implicitly shared by the apps which have been identified/marked as belonging to the target organization (that is, shared by the training data) can be found, and be further used to predicting the new app.

S232: identify the new app as belonging to the target organization based on the predicting result of the model.

If the model predicts that the new app belongs to the target organization, the new app is identified as belonging to the target organization.

Finally, a list of all apps which are identified to be belonged to (be owned by) the target organization can be obtained.

Optionally, after identifying all apps that belong to (be owned by) the target organization, these apps owned by the target organization can be downloaded from the app store, so that an automated vulnerability check can be performed on the downloaded apps. belonging

In another embodiment as shown in Fig. 3, a computer device 300 for identifying applications of a given organization is provided. The computer device 300 comprises a processing unit 310 (e.g. a processor) configured to perform the method mentioned in any one of previous embodiments such as the method in Fig. 1 or Fig. 2. Details are not described herein again.

The computer device 300 may further comprise a communication interface 320. In one example, the communication interface 320 of the computer device 300 is capable of communicating with another device (e.g. a web server or a network device) so as to extract or obtain information from an app store (or an app page of an app store).

In another embodiment, a computer-readable storage medium comprising executable instruction to configure a processor on a computer to perform the method mentioned in any one of previous embodiments such as the method in Fig. 1 or Fig. 2. Details are not described herein again.

In another embodiment, a computer program product is provided. The computer program product comprises an instruction, wherein when the computer program product is run on a computer, the computer is enabled to perform the method mentioned in any one of previous embodiments such as the method in Fig. 1 or Fig. 2. Details are not described herein again.

While some embodiments have been described in detail it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A method for identifying applications, apps, of a given organization, performed by a computer device, comprising:
obtaining a characteristic of an organization, wherein the characteristic of the organization includes an organization name and/or a domain name of the organization;
obtaining a list of apps in an app store;
extracting an app characteristic for each app in the list from the app store, wherein the app characteristic includes: an app publisher name and/or a domain name of an app publisher extracted from data containing a primary domain name of a website of the app publisher, a domain of an email address of the app publisher, or a domain name of the app publisher in a unified resource Identifier, URI, of an app page of the app store;
determining a first feature for each app in the list which indicates for each app whether the domain name of the app publisher matches the domain name of the organization, and/or whether the app publisher name matches the organization name by preprocessing the organization name and the app publisher name into word lists and calculating a numeric similarity score compared with a predefined threshold;
identifying whether each app in the list belongs to the organization based on the determined first feature, wherein an app in the list is identified as belonging to the organization when the domain name of the app publisher for the app matches the domain name of the organization, and/or the app publisher name for the app matches the organization name based on the similarity score exceeding the predefined threshold;
wherein the method further comprises:
after all the apps which have been identified as belonging to the organization; downloading all the apps which have been identified as belonging to the organization; and
performing vulnerability check on the downloaded apps; and
sending the result of the vulnerability check to a database.

2. The method according to claim 1, wherein the organization name comprises a legal name of the organization; and the organization name further comprises one or more of the following: a legal name of a subsidiary of the origination, a trademark name of the organization, a trademark name of the subsidiary, a colloquial name of the legal name of the organization or a colloquial name of the legal name of the subsidiary, a synonym of the legal name of the organization or a synonym of the legal name of the subsidiary.

3. The method according to claim 1 or 2, the app publisher name for each app in the list comprises a name of an app publisher which is used in the app store for each app in the list and/or a legal name of an app publisher for each app in the list.

4. The method according to any one of claims 1 to 3, wherein the organization name comprises a legal name of the organization, and if the origination has a subsidiary, the organization name further comprises a legal name of the subsidiary of the origination; and the app publisher name for each app in the list comprises a legal name of an app publisher for each app in the list.

5. The method according to any one of claims 1 to 4, the method further comprises:
obtaining a second feature for each app in the list from an app image of each app in the list, wherein the second feature includes one or more of the following: color information from the app image, an available text from the app image, a structural property of the app image, and trademark information of the app image, wherein the app image of each app in the list includes an app icon of each app in the list or a screenshot of an app page of each app in the list;
extracting a common feature of the second features for apps which have been identified as belonging to the organization based on the determined first feature; wherein an app in the list which has not yet been identified as belonging to the organization is called an invalid app; and
identify an invalid app in the list as an app belonging to the organization when the second feature for the invalid app matches the common feature.

6. The method according to any one of claims 1 to 5, the method further comprises:
using a set of apps, which have been identified as belonging to the target organization based on the determined first feature, as training data;
using a machine learning algorithm to build a model that predicts whether a new app belongs to the organization, wherein the model is trained on the training data, and the new app is an app in the list which has not been identified as belonging to the organization;
identify the new app as belonging to the organization based on the predicting result of the model.

7. The method according to any one of claims 1 to 6, the domain name of the organization comprises all available primary domain names which belong to the organization.

8. The method according to any one of claims 1 to 7, the first feature for each app includes a Boolean data type which has one of two possible values, wherein one possible value indicates the domain name of the app publisher matches the domain name of the organization, and the other possible value indicates the domain name of the app publisher does not match the domain name of the organization.

9. The method according to any one of claims 1 to 8, wherein the list is a list of all apps in the app store that potentially belong to the organization; and the method step of obtaining the list comprises: obtaining a list of all apps in the app store that potentially belong to the organization according to the organization name.

10. A computer device for identifying applications, apps, of a given organization, comprising a processing unit;
the processing unit is configured to:
obtain a characteristic of an organization, wherein the characteristic of the organization includes an organization name and/or a domain name of the organization;
obtain a list of apps in an app store;
extract an app characteristic for each app in the list from the app store, wherein the app characteristic includes: an app publisher name and/or a domain name of an app publisher extracted from data containing a primary domain name of a website of the app publisher, a domain of an email address of the app publisher, or a domain name of the app publisher in a unified resource identifier, URI, of an app page of the app store;
determine a first feature for each app in the list which indicates for each app whether the domain name of the app publisher matches the domain name of the organization, and/or whether the app publisher name matches the organization name by preprocessing the organization name and the app publisher name into normalized word lists and calculating a numeric similarity score compared with a predefined threshold;
identify whether each app in the list belongs to the organization based on the determined first feature, wherein an app in the list is identified as belonging to the organization when the domain name of the app publisher for the app matches the domain name of the organization, and/or when the app publisher name for the app matches the organization name based on the similarity score exceeding the predefined threshold;
whereby the processor unit is further configured to:
after all the apps which have been identified as belonging to the organization; downloading all the apps which have been identified as belonging to the organization; and
performing vulnerability check on the downloaded apps; and
the processor is further configured to: sending the result of the vulnerability check to a database.

11. A computer program product comprising an instruction, wherein when the computer program product is run on a computer, the computer is enabled to perform a method according to any one of the claims 1 to 9.

12. A computer-readable storage medium comprising executable instruction to configure a processor on a computer to perform a method according to any one of claims 1 to 9.

## Patentansprüche

1. Ein Verfahren zum Identifizieren von Anwendungen, Apps, einer gegebenen Organisation, durchgeführt durch eine Computervorrichtung, umfassend:
Erhalten eines Charakteristikums einer Organisation, wobei das Charakteristikum der Organisation einen Organisationsnamen und/oder einen Domänennamen der Organisation enthält;
Erhalten einer Liste von Apps in einem App-Store;
Extrahieren eines App-Charakteristikums für jede App in der Liste aus dem App-Store, wobei das App-Charakteristikum enthält: einen App-Herausgebernamen und/oder einen Domänennamen eines App-Herausgebers, extrahiert aus Daten, die einen primären Domänennamen einer Website des App-Herausgebers, eine Domäne einer E-Mail-Adresse des App-Herausgebers oder einen Domänennamen des App-Herausgebers in einem vereinheitlichten Ressourcenidentifikator, URI, einer App-Seite des App-Stores enthalten;
Bestimmen eines ersten Merkmals für jede App in der Liste, das für jede App angibt, ob der Domänenname des App-Herausgebers mit dem Domänennamen der Organisation übereinstimmt, und/oder ob der App-Herausgebername mit dem Organisationsnamen übereinstimmt, durch Vorverarbeiten des Organisationsnamens und des App-Herausgebernamens zu Wortlisten und Berechnen eines numerischen Ähnlichkeitswerts im Vergleich mit einem vordefinierten Schwellenwert;
Identifizieren, ob jede App in der Liste auf Grundlage des bestimmten ersten Merkmals der Organisation zugehört, wobei eine App in der Liste als der Organisation zugehörig identifiziert wird, wenn der Domänenname des App-Herausgebers für die App mit dem Domänennamen der Organisation übereinstimmt und/oder der App-Herausgebername für die App mit dem Organisationsnamen auf Grundlage dessen übereinstimmt, dass der Ähnlichkeitswert den vordefinierten Schwellenwert überschreitet;
wobei das Verfahren ferner umfasst:
nachdem alle Apps, die als der Organisation zugehörig identifiziert worden sind;
Herunterladen aller Apps, die als der Organisation zugehörig identifiziert worden sind; und
Durchführen einer Schwachstellenprüfung an den heruntergeladenen Apps; und
Senden des Ergebnisses der Schwachstellenprüfung an eine Datenbank.

2. Das Verfahren nach Anspruch 1, wobei der Organisationsname einen rechtlichen Namen der Organisation umfasst; und der Organisationsname ferner eines oder mehrere der Folgenden umfasst: einen rechtlichen Namen einer Tochtergesellschaft der Organisation, einen Markennamen der Organisation, einen Markennamen der Tochtergesellschaft, einen umgangssprachlichen Namen des rechtlichen Namens der Organisation oder einen umgangssprachlichen Namen des rechtlichen Namens der Tochtergesellschaft, ein Synonym des rechtlichen Namens der Organisation oder ein Synonym des rechtlichen Namens der Tochtergesellschaft.

3. Das Verfahren nach Anspruch 1 oder 2, wobei der App-Herausgebername für jede App in der Liste einen Namen eines App-Herausgebers, der im App-Store für jede App in der Liste verwendet wird, und/oder einen rechtlichen Namen eines App-Herausgebers für jede App in der Liste umfasst.

4. Das Verfahren nach einem der Ansprüche 1 bis 3, wobei der Organisationsname einen rechtlichen Namen der Organisation umfasst, und wenn die Organisation eine Tochtergesellschaft hat, der Organisationsname ferner einen rechtlichen Namen der Tochtergesellschaft der Entstehung umfasst; und der App-Herausgebername für jede App in der Liste einen rechtlichen Namen eines App- Herausgebers für jede App in der Liste umfasst.

5. Das Verfahren nach einem der Ansprüche 1 bis 4, wobei das Verfahren ferner umfasst:
Erhalten eines zweiten Merkmals für jede App in der Liste aus einem App-Bild jeder App in der Liste, wobei das zweite Merkmal eines oder mehrere der Folgenden enthält: Farbinformationen aus dem App-Bild, einen verfügbaren Text aus dem App-Bild, eine strukturelle Eigenschaft des App-Bildes und Markeninformationen des App-Bildes, wobei das App-Bild jeder App in der Liste ein App-Icon jeder App in der Liste oder einen Screenshot einer App-Seite jeder App in der Liste enthält;
Extrahieren eines gemeinsamen Merkmals der zweiten Merkmale für Apps, die auf Grundlage des bestimmten ersten Merkmals als der Organisation zugehörig identifiziert worden sind; wobei eine App in der Liste, die noch nicht als der Organisation zugehörig identifiziert worden ist, als eine ungültige App bezeichnet wird; und
Identifizieren einer ungültigen App in der Liste als eine der Organisation zugehörige App, wenn das zweite Merkmal für die ungültige App mit dem gemeinsamen Merkmal übereinstimmt.

6. Das Verfahren nach einem der Ansprüche 1 bis 5, wobei das Verfahren ferner umfasst:
Verwenden eines Satzes von Apps, die auf Grundlage des bestimmten ersten Merkmals als der Zielorganisation zugehörig identifiziert worden sind, als Trainingsdaten;
Verwenden eines Algorithmus für maschinelles Lernen zum Erstellen eines Modells, das vorhersagt, ob eine neue App der Organisation zugehört, wobei das Modell mit den Trainingsdaten trainiert wird und die neue App eine App in der Liste ist, die nicht als der Organisation zugehörig identifiziert worden ist;
Identifizieren der neuen App als der Organisation zugehörig auf Grundlage des Vorhersageergebnisses des Modells.

7. Das Verfahren nach einem der Ansprüche 1 bis 6, wobei der Domänenname der Organisation alle verfügbaren primären Domänennamen umfasst, die der Organisation zugehören.

8. Das Verfahren nach einem der Ansprüche 1 bis 7, wobei das erste Merkmal für jede App einen booleschen Datentyp enthält, der einen von zwei möglichen Werten aufweist, wobei ein möglicher Wert angibt, dass der Domänenname des App-Herausgebers mit dem Domänennamen der Organisation übereinstimmt, und der andere mögliche Wert angibt, dass der Domänenname des App- Herausgebers nicht mit dem Domänennamen der Organisation übereinstimmt.

9. Das Verfahren nach einem der Ansprüche 1 bis 8, wobei die Liste eine Liste aller Apps in dem App-Store ist, die potenziell der Organisation zugehören; und der Verfahrensschritt des Erhaltens der Liste umfasst: Erhalten einer Liste aller Apps in dem App-Store, die potenziell der Organisation gemäß dem Organisationsnamen zugehören.

10. Eine Computervorrichtung zum Identifizieren von Anwendungen, Apps, einer gegebenen Organisation, umfassend eine Verarbeitungseinheit;
die Verarbeitungseinheit ist eingerichtet, um:
ein Charakteristikum einer Organisation zu erhalten, wobei das Charakteristikum der Organisation einen Organisationsnamen und/oder einen Domänennamen der Organisation enthält;
eine Liste von Apps in einem App-Store zu erhalten;
ein App-Charakteristikum für jede App in der Liste aus dem App-Store zu extrahieren, wobei das App- Charakteristikum enthält: einen App-Herausgebernamen und/oder einen Domänennamen eines App- Herausgebers, extrahiert aus Daten, die einen primären Domänennamen einer Website des App-Herausgebers, eine Domäne einer E-Mail-Adresse des App-Herausgebers oder einen Domänennamen des App-Herausgebers in einem vereinheitlichten Ressourcenidentifikator, URI, einer App-Seite des App-Stores enthalten;
ein erstes Merkmal für jede App in der Liste zu bestimmen, das für jede App angibt, ob der Domänenname des App-Herausgebers mit dem Domänennamen der Organisation übereinstimmt und/oder ob der App-Herausgebername mit dem Organisationsnamen übereinstimmt, durch Vorverarbeiten des Organisationsnamens und des App-Herausgebernamens zu normalisierten Wortlisten und Berechnen eines numerischen Ähnlichkeitswerts im Vergleich mit einem vordefinierten Schwellenwert;
zu identifizieren, ob jede App in der Liste auf Grundlage des bestimmten ersten Merkmals der Organisation zugehört, wobei eine App in der Liste als der Organisation zugehörig identifiziert wird, wenn der Domänenname des App-Herausgebers für die App mit dem Domänennamen der Organisation übereinstimmt und/oder wenn der App-Herausgebername für die App mit dem Organisationsnamen auf Grundlage dessen übereinstimmt, dass der Ähnlichkeitswert den vordefinierten Schwellenwert überschreitet;
wobei die Prozessoreinheit ferner eingerichtet ist, um:
nachdem alle Apps, die als der Organisation zugehörig identifiziert worden sind;
Herunterladen aller Apps, die als der Organisation zugehörig identifiziert worden sind; und
Durchführen einer Schwachstellenprüfung an den heruntergeladenen Apps; und
der Prozessor ist ferner eingerichtet zum: Senden des Ergebnisses der Schwachstellenprüfung an eine Datenbank.

11. Ein Computerprogrammprodukt, umfassend eine Anweisung, wobei, wenn das Computerprogrammprodukt auf einem Computer ausgeführt wird, der Computer dazu befähigt wird, ein Verfahren nach einem der Ansprüche 1 bis 9 durchzuführen.

12. Ein computerlesbares Speichermedium, umfassend eine ausführbare Anweisung zum Einrichten eines Prozessors auf einem Computer zum Durchführen eines Verfahrens nach einem der Ansprüche 1 bis 9.

## Revendications

1. Procédé d'identification d'applications, apps, d'une organisation donnée, exécuté par un dispositif informatique, le procédé comprenant les étapes suivantes :
obtenir une caractéristique d'une organisation, où la caractéristique de l'organisation comprend un nom d'organisation et/ou un nom de domaine de l'organisation ;
obtenir une liste d'applications dans un magasin d'applications ;
extraire une caractéristique d'application pour chaque application de la liste du magasin d'applications, la caractéristique de l'application comprenant : le nom de l'éditeur d'applications et/ou le nom de domaine de l'éditeur d'applications extrait de données contenant le nom de domaine primaire du site Web de l'éditeur d'applications, le domaine d'une adresse électronique de l'éditeur d'applications, ou le nom de domaine de l'éditeur d'applications dans un identifiant de ressource unifié, URI, d'une page d'application du magasin d'applications ;
déterminer une première caractéristique pour chaque application de la liste qui indique, pour chaque application, si le nom de domaine de l'éditeur de l'application correspond au nom de domaine de l'organisation, et/ou si le nom de l'éditeur de l'application correspond au nom de l'organisation en prétraitant le nom de l'organisation et le nom de l'éditeur de l'application sous forme de listes de mots et en calculant un score de similarité numérique à comparer à un seuil prédéfini ;
identifier si chaque application de la liste appartient à l'organisation sur la base de la première caractéristique déterminée, où une application de la liste est identifiée comme appartenant à l'organisation lorsque le nom de domaine de l'éditeur d'applications pour l'application correspond au nom de domaine de l'organisation, et/ou le nom de l'éditeur d'applications pour l'application correspond au nom de l'organisation sur la base du score de similarité dépassant le seuil prédéfini ;
le procédé comprenant en outre les étapes suivantes :
après toutes les applications qui ont été identifiées comme appartenant à l'organisation ; télécharger toutes les applications qui ont été identifiées comme appartenant à l'organisation ; et
effectuer une vérification des vulnérabilités sur les applications téléchargées ; et
envoyer le résultat de la vérification des vulnérabilités à une base de données.

2. Procédé selon la revendication 1, dans lequel le nom de l'organisation comprend une dénomination sociale de l'organisation ; et le nom de l'organisation comprend en outre un ou plusieurs des éléments suivants : une dénomination sociale d'une filiale de l'organisation, une marque de l'organisation, une marque de la filiale, le nom usuel de la dénomination sociale de l'organisation ou le nom usuel de la dénomination sociale de la filiale, un synonyme de la dénomination sociale de l'organisation ou un synonyme de la dénomination sociale de la filiale.

3. Procédé selon la revendication 1 ou la revendication 2, dans lequel le nom de l'éditeur de l'application pour chaque application de la liste comprend le nom d'un éditeur d'applications qui est utilisé dans le magasin d'applications pour chaque application de la liste et/ou une dénomination sociale d'un éditeur d'applications pour chaque application de la liste.

4. Procédé selon l'une quelconque des revendications 1 à 3, dans lequel la dénomination de l'organisation comprend une dénomination sociale de l'organisation et, si l'organisation a une filiale, la dénomination de l'organisation comprend en outre une dénomination sociale de la filiale de l'organisation ; et la dénomination de l'éditeur d'applications pour chaque application de la liste comprend une dénomination sociale d'un éditeur d'applications pour chaque application de la liste.

5. Procédé selon l'une quelconque des revendications 1 à 4, le procédé comprenant en outre les étapes suivantes :
obtenir une deuxième caractéristique pour chaque application de la liste à partir d'une image d'application de chaque application de la liste, la deuxième caractéristique comprenant un ou plusieurs des éléments suivants : des informations de couleur de l'image de l'application, un texte disponible de l'image de l'application, une propriété structurelle de l'image de l'application et des informations de marque de l'image de l'application, l'image de l'application de chaque application de la liste comprenant une icône d'application de chaque application de la liste ou une capture d'écran d'une page d'application de chaque application de la liste ;
extraire une caractéristique commune des deuxièmes caractéristiques pour les applications qui ont été identifiées comme appartenant à l'organisation sur la base de la première caractéristique déterminée ; où une application de la liste qui n'a pas encore été identifiée comme appartenant à l'organisation est appelée application non valide ; et
identifiez une application non valide dans la liste en tant qu'application appartenant à l'organisation lorsque la deuxième caractéristique de l'application non valide correspond à la caractéristique commune.

6. Procédé selon l'une quelconque des revendications 1 à 5, le procédé comprenant en outre les étapes suivantes :
utiliser un ensemble d'applications, qui ont été identifiées comme appartenant à l'organisation cible sur la base de la première caractéristique déterminée, comme données d'apprentissage ;
utiliser un algorithme d'apprentissage automatique pour construire un modèle qui prédit si une nouvelle application appartient à l'organisation, où le modèle est entraîné sur les données d'entraînement, et la nouvelle application est une application dans la liste qui n'a pas été identifiée comme appartenant à l'organisation ;
identifier la nouvelle application comme appartenant à l'organisation en fonction du résultat de prédiction du modèle.

7. Procédé selon l'une quelconque des revendications 1 à 6, dans lequel le nom de domaine de l'organisation comprend tous les noms de domaine primaires disponibles qui appartiennent à l'organisation.

8. Procédé selon l'une quelconque des revendications 1 à 7, dans lequel la première caractéristique pour chaque application comprend un type de données booléennes qui a l'une de deux valeurs possibles, où une valeur possible indique que le nom de domaine de l'éditeur d'applications correspond au nom de domaine de l'organisation, et l'autre valeur possible indique que le nom de domaine de l'éditeur d'applications ne correspond pas au nom de domaine de l'organisation.

9. Procédé selon l'une quelconque des revendications 1 à 8, dans lequel la liste est une liste de toutes les applications dans le magasin d'applications qui appartiennent potentiellement à l'organisation ; et l'étape de procédé comprenant d'obtenir la liste comprend : d'obtenir une liste de toutes les applications dans le magasin d'applications qui appartiennent potentiellement à l'organisation selon le nom d'organisation.

10. Dispositif informatique pour identifier des applications, apps, d'une organisation donnée, le dispositif comprenant une unité de traitement ;
l'unité de traitement étant configurée pour :
obtenir une caractéristique d'une organisation, où la caractéristique de l'organisation comprend un nom d'organisation et/ou un nom de domaine de l'organisation ;
obtenir une liste d'applications dans un magasin d'applications ;
extraire une caractéristique d'application pour chaque application de la liste du magasin d'applications, la caractéristique de l'application comprenant : le nom de l'éditeur d'applications et/ou le nom de domaine de l'éditeur d'applications extrait de données contenant le nom de domaine primaire du site Web de l'éditeur d'applications, le domaine d'une adresse électronique de l'éditeur d'applications, ou le nom de domaine de l'éditeur d'applications dans un identifiant de ressource unifié, URI, d'une page d'application du magasin d'applications ;
déterminer une première caractéristique pour chaque application de la liste qui indique, pour chaque application, si le nom de domaine de l'éditeur d'applications correspond au nom de domaine de l'organisation, et/ou
si le nom de l'éditeur d'applications correspond au nom de l'organisation en prétraitant le nom de l'organisation et le nom de l'éditeur d'applications sous forme de listes de mots normalisées et en calculant un score de similarité numérique à comparer à un seuil prédéfini ;
identifier si chaque application de la liste appartient à l'organisation sur la base de la première caractéristique déterminée, où une application de la liste est identifiée comme appartenant à l'organisation lorsque le nom de domaine de l'éditeur d'applications pour l'application correspond au nom de domaine de l'organisation, et/ou le nom de l'éditeur d'applications pour l'application correspond au nom de l'organisation sur la base du score de similarité dépassant le seuil prédéfini ; moyennant quoi l'unité de traitement est en outre configurée pour :
après toutes les applications qui ont été identifiées comme appartenant à l'organisation ; télécharger toutes les applications qui ont été identifiées comme appartenant à l'organisation ; et
effectuer une vérification des vulnérabilités sur les applications téléchargées ; et
le processeur étant en outre configuré pour : envoyer le résultat de la vérification des vulnérabilités à une base de données.

11. Produit programme informatique comprenant une instruction où, lorsque le produit programme informatique est exécuté sur un ordinateur, l'ordinateur est autorisé à exécuter un procédé selon l'une quelconque des revendications 1 à 9.

12. Support de stockage lisible par ordinateur comprenant une instruction exécutable pour configurer un processeur sur un ordinateur pour exécuter un procédé selon l'une quelconque des revendications 1 à 9.
